# EUROPEAN PATENT APPLICATION

(11) **EP 4 650 504 A1**
(43) Date of publication of application: **19.11.2025**
(21) Application number: 25175373.7
(22) Date of filing: 09.05.2025
(51) Int. Cl.: D04H 3/16, D01D 4/02, D01D 5/098, B29C 48/345, D04H 3/02

(54) **SPINNERET FOR MULTI-ROW COAXIAL SPUNBOND AND/OR MELT-BLOWN TYPE PLANT**

(30) Priority: 16.05.2024 IT 202400011149
(71) Applicant: Fratelli Ceccato Milano S.r.l., 20123 Milano (IT)
(72) Inventor: ANGELICO, Giuseppe, 20095 Cusano Milanino (IT)
(74) Representative: Lunati & Mazzoni S.r.L.

(57) **Abstract**

A spinneret (1) is provided for a multi-row coaxial spunbond and/or melt-blown plant developing along a main axis (1a) and a main plane (1b), defining a vertical axis (1c) perpendicular to the main axis (1a) and the main plane (1b) and comprising a plurality of acceleration conduits (2) each extending along its own dispensing axis (2a) transverse to the main plane (1b) and adapted to each dispense a respective polymeric filament along the dispensing axis (2a); a plate (7) including first holes (70) adapted to house the acceleration conduits (2), and second holes (71) separated from the first holes (70) and adapted to allow the passage of air or gas; a mask (8) adjacent to the plate (7) along the vertical axis (1a), including a plurality of third holes (80) centered with respect to the first holes (70), in fluid passage connection with the second holes (71) and adapted to house part of the acceleration conduits (2) and to allow, at the same time, the passage of air or gas, wherein the second holes (71) are more than four in number, distributed around at least part of the first holes (70) and centered along circumferences (7a) each developing parallel to the main plane (1b) around a respective first hole (70) without touching any other first hole (70).

## Description

The present invention relates to a spinneret for multi-row coaxial spunbond and/or melt-blown type plant of the type specified in the preamble of the first claim.

In particular, the present invention relates to an end portion of a multi-row coaxial spunbond and/or melt-blown type plant adapted to allow the distribution of polymeric fluid in output from the plant in the form of extruded polymeric filaments to obtain non-woven fabric.

As is known, non-woven fabric, or NWF, is an industrial product similar to a fabric but obtained by processes other than weaving and knitting. Therefore, within a non-woven fabric, the fibers have a random pattern, with no identifiable ordered structure while in a fabric the fibers have two prevailing and orthogonal directions between them, usually called weft and warp.

Currently, a plurality of products containing NWF are manufactured depending on the manufacturing technique used, mainly connected to the use that is made of the product itself.

In particular, a distinction is made between high quality NWFs for sanitary products, and low quality NWFs used especially for geotex.

From a technical point of view, non-woven fabrics can be basically divided into spunlace, spunbond and multirow coaxial or cusp melt-blown fabrics.

The spunlace fabric undergoes processing that gives the material equidirectional resistance. Thanks to this property, to the possibility of being produced in different materials such as viscose, polyester, cotton, polyamide and microfibre, to the two possible finishes, i.e. smooth or perforated, and to the multitude of smooth or printed colours, spunlace is suitable both for the sanitary sector and for the automotive, cosmetic, industrial or single-use sectors.

Spunbond, usually made of polypropylene, is a non-woven fabric that finds multiple applications in the agricultural, sanitary, construction, furniture, mattress and other related sectors. By means of an appropriate treatment, it is possible to create a series of highly specific products for each sector: fluorescent, soft calendered, anti-mite, fireproof, antibacterial, antistatic, anti-UV and others. Numerous finishes can also be applied to the Spundbond, such as printed, laminated, flexographic printed laminate and self-adhesive.

The production plants of the spundbond non-woven fabric essentially include at least one inlet conduit of the polymeric substance, a polymer extrusion head, a polymer distributor or breaker plate and a spinneret adapted to make the actual spundbond yarn that is deposited on a conveyor belt.

The mentioned elements are each arranged accordingly and adjacent to each other in such a way as to allow the processing of the polymer and the distribution of the NWF spundbond.

More in detail, the polymer inside the dispensing conduit is pushed under pressure and at high temperatures, usually above 200°C, towards the extrusion head. In this regard, in general, a pressure control is carried out, for example by means of a pressure switch, to ensure the continuity of the output yarn and the precision of the deposition process.

The extrusion head distributes the polymer along a distribution surface through which the molten polymer reaches the distributor. Between the distributor, or breaker plate, and the extrusion head there is a filter consisting of a steel sheet with a thickness usually varying between 0.8 and 1.6 mm and including fine meshes, for example, with nominal dimensions comprised between 20 and 110 µm. Basically, therefore, the filter mentioned is a stretched net.

After passing inside the filter, the molten polymer enters the distributor that accompanies the polymer towards the spinneret where the polymer is extruded into filaments constituting the NWF spundbond. In detail, the filter has the purpose of blocking particles or polymer pigments, not perfectly dissolved or in any case larger, which by entering the spinneret could obstruct the extremely small NWF extrusion holes.

The NWF melt-blown is made through specific spinnerets in order to achieve higher technical characteristics than previous TNTs. In fact, the melt-blown fabric is characterised by fiber with high filtering power for both liquid and aeriform substances.

The melt-blown non-woven fabric production plants consist of a box that encloses the melt-blown fiber manufacture device and all the parts that are necessary for the process to function at its best.

The known cusp melt-blown plants comprise an extrusion head, a cusp distributor, and an air blade.

The multi-row coaxial melt-blown plants provide for stretching the polymer that comes out of tubes, arranged in rows, through the air which, in a coaxial manner, passes from the outside of the tube and pushes the fiber downwards.

In particular, the multi-row coaxial melt-blown type plants comprise components defining coaxial holes, arranged in rows and adapted to house at least part of the aforementioned tubes transiting coaxially inside the holes in such a way as to allow the diffusion of polymeric fluid and, at the same time, to allow the diffusion of air or gas from at least part of the holes.

Usually, these plants include devices, called spin packs, including a plurality of different components adapted to interact with each other. Usually, a spin pack consists of a spinneret and a diffusion device including one or more components called air plate.

In even more detail, the currently known spinnerets for multi-row coaxial spunbond and/or melt-blown plants comprise a plate including first holes adapted to house tubes configured to distribute polymeric fluid, and second holes separated from the first holes and adapted to allow the passage of air or gas, and further a mask, separate or in one piece with respect to the plate, including a plurality of third holes centered with respect to the first holes, in fluid passage connection with said second holes and adapted to house part of the tubes and to allow, at the same time, the passage of said air or gas.

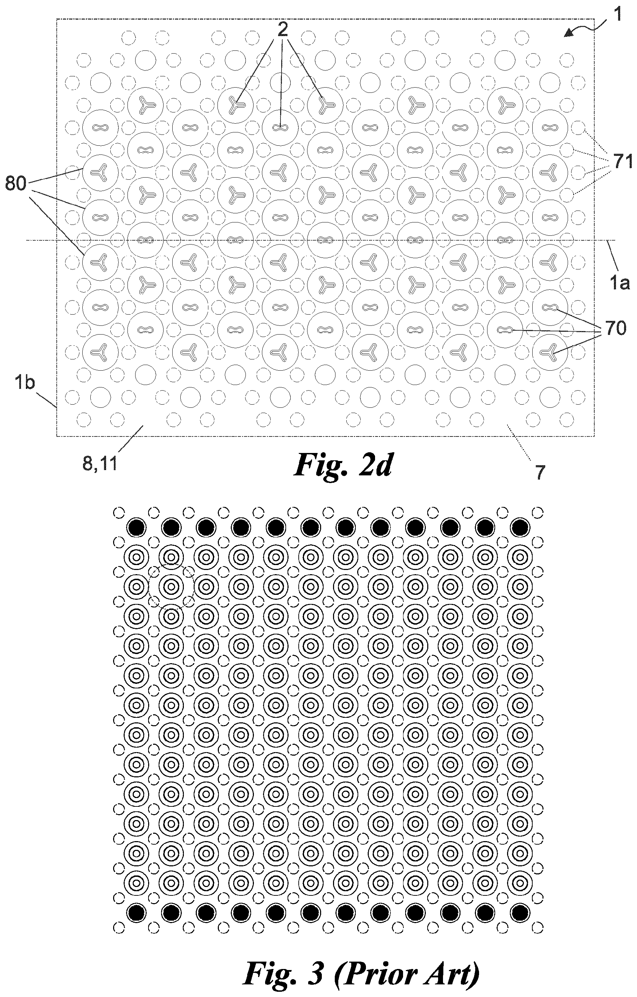

First and second holes are generally arranged as a chequerboard and the second holes are then distributed, in number equal to four, around each dispensing hole, as shown in Fig. 3.

The known art described comprises some important drawbacks.

In particular, the air passing through the second and third holes must be introduced under pressure, at a certain temperature, to ensure that the filament has the right diameter, flows correctly, cools down and is delivered continuously without breaking. The plants must therefore guarantee a certain flow rate and consume energy to heat polymers and air.

However, the current arrangement of the spinnerets is disadvantageous and makes the processing of the polymeric filaments inefficient and inexpensive.

Further, the layers of non-woven fabric made with the currently known spinnerets do not allow the creation of particularly high-performance layers when placed under traction in different directions.

In fact, while the non-woven fabrics thus made are very robust along the main development direction of the plant, they are not so perpendicular to that direction. The consequence of this weakness is, for example, very impactful in the manufacture of diapers. The latter must often be made with very low weights, equal to 5 g/m2 and include a sandwich structure with two outer spundbond layers and a central melt-blown layer mainly used to retain liquids.

The latter layer is usually made with weights equal to 1-2 g/m2 and is often subject to tearing due to weakness along some directions and, therefore, rupture compromises the liquid tightness and the main functionality of the diaper.

In this situation, the technical task underlying the present invention is to devise a spinneret for multi-row coaxial spunbond and/or melt-blown type plant capable of substantially obviating at least part of the aforementioned drawbacks.

In the context of the said technical task, it is an important aim of the invention to obtain a spinneret for a spunbond and/or melt-blown coaxial multi-row plant that enables the polymeric filament to be dispensed efficiently and economically.

In addition, it is a further object of the invention to obtain a spinneret for a multi-row coaxial spunbond and/or melt-blown type plant that makes it possible to make a membrane, or layer, of robust non-woven fabric in different directions, in particular perpendicular to each other.

Another important object of the invention is to realize a spinneret for multi-row coaxial spunbond and/or melt-blown type plant that allows to realize robust diapers given by the coupling of the different layers formed by the plant.

The technical task and the specified purposes are achieved by a spinneret for multi-row coaxial spunbond and/or melt-blown type plant as claimed in the appended Claim 1.

Preferred embodiment are highlighted in the dependent claims.

The features and advantages of the invention are clarified below by the detailed description of preferred embodiments of the invention, with reference to the attached drawings, in which:
Fig. 1a shows a detailed front view of third and second holes of a spinneret for a multi-row coaxial spunbond and/or melt-blown plant according to the invention wherein the second holes are hatched;
Fig. 1b shows a sectional view, corresponding to the section plane I-I, of the plant of Fig. 1a;
Fig. 2a illustrates a detailed front view of third and second holes of a spinneret for a multi-row coaxial spunbond and/or melt-blown plant according to the invention in an embodiment wherein the third holes include acceleration conduits all having a circular outline;
Fig. 2b is a detailed front view of third and second holes of a spinneret for a multi-row coaxial spunbond and/or melt-blown plant according to the invention in an embodiment wherein the third holes include acceleration conduits all having a cross outline;
Fig. 2c represents a detailed front view of third and second holes of a spinneret for a multi-row coaxial spunbond and/or melt-blown plant according to the invention in an embodiment wherein the third holes include acceleration conduits all having a cross outline;
Fig. 2d shows a detailed front view of third and second holes of a spinneret for a multi-row coaxial spunbond and/or melt-blown plant according to the invention in an embodiment wherein the third holes include acceleration conduits having in part a circular outline and in part a cross outline;
Fig. 3 illustrates a chessboard configuration of third and second holes of a spinneret for a multi-row coaxial melt-blown plant of the prior art;
Fig. 4a shows a simplified diagram of a spinneret for a multi-row coaxial spunbond and/or melt-blown type plant according to the invention wherein acceleration conduits with opposite or complementary angles of inclination are present in the different rows;
Fig. 4b illustrates a simplified diagram of a spinneret for multi-row coaxial spunbond and/or melt-blown type plant according to the invention wherein the acceleration conduits of the second row are perpendicular to the main plane and define a second angle of inclination equal to 90°;
Fig. 5a is a side view of a spinneret for a multi-row coaxial spunbond and/or melt-blown type plant according to the invention in side view wherein the rows of acceleration conduits are made from tubes of a multi-row coaxial melt-blown type plant whose termination is flush with the second end of the spinneret;
Fig. 5b represents a side view of a spinneret for a multi-row coaxial spunbond and/or melt-blown type plant according to the invention in side view wherein the rows of acceleration conduits are made of tubes of a multi-row coaxial melt-blown type plant whose termination protrudes from the second end of the spinneret;
Fig. 6 shows an acceleration conduit of a spinneret for multi-row coaxial spunbond and/or melt-blown type plant according to the invention wherein the outer surface is outlined as the inner surface;
Fig. 7a illustrates a sectional plan view of an outline having a first concave shape of an acceleration conduit of a spinneret for multi-row coaxial spunbond and/or melt-blown type plant according to the invention in which a convex portion is highlighted in hatching;
Fig. 7b is a sectional view on the sectional plane of an outline having a second concave shape of an acceleration conduit of a spinneret for multi-row coaxial spunbond and/or melt-blown type plant according to the invention in which a convex portion is highlighted in hatching;
Fig. 7c represents a sectional view on the sectional plane of an outline having a third concave shape of an acceleration conduit of a spinneret for multi-row coaxial spunbond and/or melt-blown type plant according to the invention in which a convex portion is highlighted in hatching;
Fig. 7d shows a sectional view on the sectional plane of an outline having a fourth convex shape of an acceleration conduit of a spinneret for multi-row coaxial spunbond and/or melt-blown type plant according to the invention;
Fig. 7e illustrates a sectional plan view of an outline having a fifth convex shape of an acceleration conduit of a spinneret for multi-row coaxial spunbond and/or melt-blown type plant according to the invention;
Fig. 7f is a sectional plan view of an outline having a sixth concave shape of an acceleration conduit of a spinneret for multi-row coaxial spunbond and/or melt-blown type plant according to the invention in which a convex portion is highlighted in hatching;
Fig. 7g represents a sectional view on the sectional plane of an outline having a seventh concave shape of an acceleration conduit of a spinneret for multi-row coaxial spunbond and/or melt-blown type plant according to the invention in which a convex portion is highlighted in hatching;
Fig. 7h shows a sectional view on the sectional plane of an outline having an eighth concave shape of an acceleration conduit of a spinneret for multi-row coaxial spunbond and/or melt-blown type plant according to the invention in which a convex portion is highlighted in hatching;
Fig. 7i illustrates a sectional view on the sectional plane of an outline having a ninth concave shape of an acceleration conduit of a spinneret for multi-row coaxial spunbond and/or melt-blown type plant according to the invention in which a convex portion is highlighted in hatching;
Fig. 7j is a sectional view on the sectional plane of an outline having a tenth concave shape of an acceleration conduit of a spinneret for multi-row coaxial spunbond and/or melt-blown type plant according to the invention in which a convex portion is highlighted in hatching;
Fig. 8a represents a perspective view of an acceleration conduit of a spinneret for multi-row coaxial spunbond and/or melt-blown type plant according to the invention in which the outer surface has a cylindrical shape and the outline of the shape of Fig. 7a;
Fig. 8b shows a perspective view of an acceleration conduit of a spinneret for multi-row coaxial spunbond and/or melt-blown type plant according to the invention in which the outer surface has a cylindrical shape and the outline has the shape of Fig. 7b
Fig. 8c illustrates a perspective view of an acceleration conduit of a spinneret for multi-row coaxial spunbond and/or melt-blown type plant according to the invention in which the outer surface has a cylindrical shape and the outline of the shape of Fig. 7c
Fig. 8d is a perspective view of an acceleration conduit of a spinneret for multi-row coaxial spunbond and/or melt-blown type plant according to the invention in which the outer surface has a cylindrical shape and the outline of the shape of Fig. 7d
Fig. 8e represents a perspective view of an acceleration conduit of a spinneret for multi-row coaxial spunbond and/or melt-blown type plant according to the invention in which the outer surface has a cylindrical shape and the outline of the shape of Fig. 7e
Fig. 8f shows a perspective view of an acceleration conduit of a spinneret for multi-row coaxial spunbond and/or melt-blown type plant according to the invention in which the outer surface has a cylindrical shape and the outline has the shape of Fig. 7f
Fig. 8g illustrates a perspective view of an acceleration conduit of a spinneret for multi-row coaxial spunbond and/or melt-blown type plant according to the invention in which the outer surface has a cylindrical shape and the outline of the shape of Fig. 7g;
Fig. 8h is a perspective view of an acceleration conduit of a spinneret for multi-row coaxial spunbond and/or melt-blown type plant according to the invention in which the outer surface has a cylindrical shape and the outline of the shape of Fig. 7h
Fig. 8i represents a perspective view of an acceleration conduit of a spinneret for multi-row coaxial spunbond and/or melt-blown type plant according to the invention in which the outer surface has a cylindrical shape and the outline of the shape of Fig. 7i
Fig. 8j shows a perspective view of an acceleration conduit of a spinneret for multi-row coaxial spunbond and/or melt-blown type plant according to the invention in which the outer surface has a cylindrical shape and the outline has the shape of Fig. 7j
Fig. 9a illustrates a cross-sectional view of the terminations of the acceleration conduits of a spinneret for multi-row coaxial spunbond and/or melt-blown type plant according to the invention in which the outer surface is outlined like the inner surface and in which the conduits have the same outline on the same column and alternate outlines on the same row;
Fig. 9b is a cross-sectional view of the terminations of the acceleration conduits of a spinneret for multi-row coaxial spunbond and/or melt-blown type plant according to the invention wherein the outer surface is outlined like the inner surface and wherein the conduits have the same outline;
Fig. 9c represents a cross-sectional view of the terminations of the acceleration conduits of a spinneret for multi-row coaxial spunbond and/or melt-blown type plant according to the invention mutually collated and alternated with columns of conduits defining each circular outline and in which the outer surface is outline as the inner surface;
Fig. 9d shows a cross-sectional view of the terminations of the acceleration conduits of a spinneret for multi-row coaxial spunbond and/or melt-blown type plant according to the invention in which the outer surface is outlined like the inner surface and in which the conduits have the same outline on the same column and alternating concave and convex outlines respectively on the same row;
Fig. 10a illustrates a cross-sectional view of the terminations of the acceleration conduits of a spinneret for multi-row coaxial spunbond and/or melt-blown type plant according to the invention in which the outer surface is cylindrical and in which the conduits have the same concave outline;
Fig. 10b is a cross-sectional view of the terminations of the acceleration conduits of a spinneret for multi-row coaxial spunbond and/or melt-blown type plant according to the invention in which the outer surface is cylindrical and in which the conduits have the same triangular convex outline;
Fig. 10c represents a cross-sectional view of the terminations of the acceleration conduits of a spinneret for multi-row coaxial spunbond and/or melt-blown type plant according to the invention in which the outer surface is cylindrical and in which the conduits have the same almost rectangular convex outline;
Fig. 10d shows a cross-sectional view of the terminations of the acceleration conduits of a spinneret for multi-row coaxial spunbond and/or melt-blown type plant according to the invention in which the outer surface is cylindrical and in which the conduits have the same almost stellar concave outline;
Fig. 11a illustrates a cross-sectional view of the terminations of the acceleration conduits of a spinneret for multi-row coaxial spunbond and/or melt-blown type plant according to the invention in which the outer surface is cylindrical, the conduits have the same concave outline and in which the conduits are alternated in a checkerboard manner with conduits having a circular outline;
Fig. 11b is a cross-sectional view of the terminations of the acceleration conduits of a spinneret for multi-row coaxial spunbond and/or melt-blown type plant according to the invention in which the outer surface is cylindrical, the conduits have two different concave outlines and in which the differently outlined conduits are alternated in a checkerboard manner;
Fig. 11c represents a cross-sectional view of the terminations of the acceleration conduits of a spinneret for multi-row coaxial spunbond and/or melt-blown type plant according to the invention in which the outer surface is cylindrical, the conduits have two different outlines respectively concave and convex and in which the differently outlined conduits are alternated in a checkerboard manner; and
Fig. 11d shows a cross-sectional view of the terminations of the acceleration conduits of a spinneret for multi-row coaxial spunbond and/or melt-blown type plant according to the invention in which the outer surface is cylindrical, the conduits have two different outlines respectively concave and convex and in which the differently outlined conduits are alternated in a checkerboard manner.

In this document, when measurements, values, shapes, and geometric references (such as perpendicularity and parallelism) are associated with words like "approximately" or other similar terms, such as "almost" or "substantially", they are to be understood as excluding measurement errors or inaccuracies due to production and/or manufacturing errors and, above all, as having less than a slight deviation from the associated value, measurement, shape, or geometric reference. For example, if associated with a value, such terms preferably indicate a deviation by no more than 10% of the value itself.

Moreover, when used, terms such as "first", "second", "upper", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computing", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

Unless otherwise stated, the measurements and data reported in this text shall be considered as provided in International Standard Atmosphere ICAO (ISO 2533:1975).

With reference to the Figures, the spinneret for multi-row coaxial spunbond and/or melt-blown type plant according to the invention is globally referred to with the numeral 1.

The spinneret 1 is the portion of the plant from which polymer filaments made from the polymer fluid directly exit. Therefore, in a spunbond plant, the spinneret 1 is the downstream portion of the plant adapted to convey polymeric filaments on a deposition surface to make non-woven fabric.

Basically, therefore, the spinneret 1 can be presented as one or more perforated plates.

In a multi-row coaxial melt-blown plant, the spinneret 1 can be defined by a spin pack. For example, the spinneret 1 may include a spinneret and an air plate.

The spinneret includes, in turn, a plurality of coaxial holes, arranged in rows, adapted to house tubes passing coaxially inside the holes in such a way as to allow the diffusion of polymeric fluid and, at the same time, to allow the diffusion of air or gas from at least part of the holes, then passing through the air plate.

In this case, therefore, the plant provides for stretching the polymer that comes out of tubes, arranged in rows, through the air that, coaxially, passes from the outside of the tube and pushes the fiber downwards.

In any case, preferably, the spinneret 1 develops mainly along a main axis 1a. The main axis 1a is a virtual axis, for example barycentric, along which the spinneret 1 extends.

In addition, the spinneret 1 also extends along a main plane 1b. The main plane 1b can be provided, for example, by an intermediate plane, preferably parallel to the support surface on which the polymeric filaments that make up the non-woven fabric are deposited.

The main axis 1a may be parallel and in some cases co-planar to the main plane 1b.

In addition, the spinneret 1 defines a vertical axis 1c.

The vertical axis 1c is preferably perpendicular to the main axis 1a. Hence, the vertical axis 1c is preferably also perpendicular to the main plane 1b. Therefore, the vertical axis 1c is preferably oriented perpendicular to the support surface on which the polymeric filaments that make up the non-woven fabric are deposited and runs along the spinneret 1 from upstream to downstream.

The spinneret 1 comprises a plurality of acceleration conduits 2.

If the spinneret 1 is part of a spundbond system, the acceleration conduits 2 can be made by simple outlet through holes through which the polymer fluid is stretched to make the filaments.

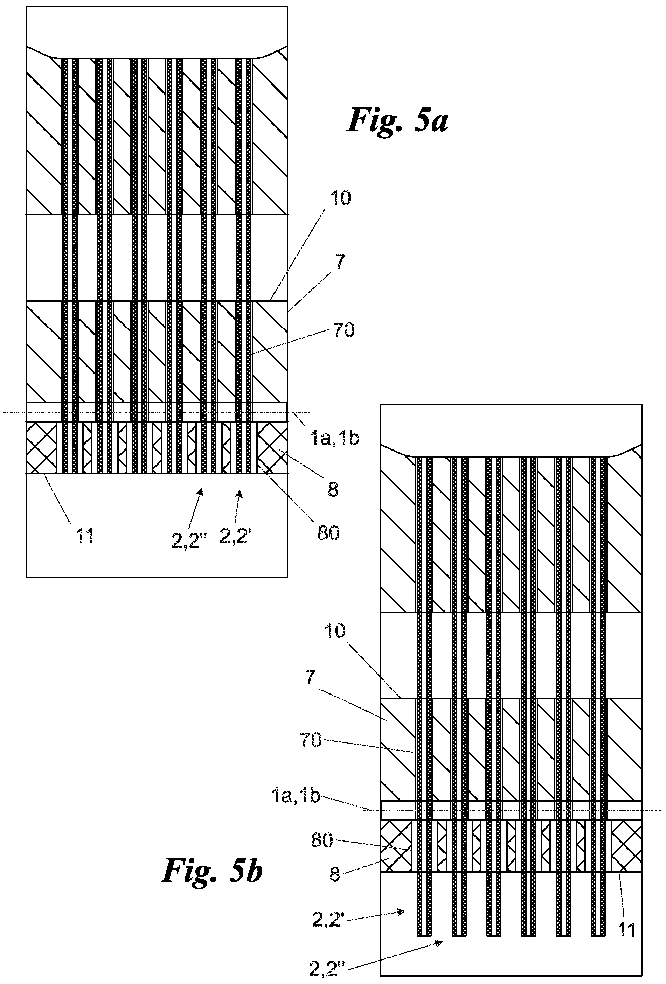

If the spinneret 1 is part of a multi-row coaxial melt-blown plant, the acceleration conduits 2 can be made of tubes through which the polymer fluid is stretched to make the filaments, as for example shown in Figs. 5a-5b.

In every case, each of the acceleration conduits 2 therefore extends along its own dispensing axis 2a.

The dispensing axis 2a is the axis along which the polymer fluid flows along the acceleration conduit 2. The dispensing axis 2a is preferably transverse to the main plane 1b, for example perpendicular to the main plane 1b.

Therefore, the acceleration conduits 2 are adapted to dispense each a respective polymer filament along the dispensing axis 2a.

The device 1 therefore includes a plate 7 and a mask 8.

The plate 7 is substantially a geometric element extending mainly along or parallel to the main plane 1b and in which the out-of-plane dimension is reduced with respect to the other two dimensions. In particular, the plate 7 extends predominantly along the main plane 1b.

The plate 7 also includes first holes 70 and second holes 71.

The first holes 70 are preferably configured to house the acceleration conduits 2. In particular, preferably, each first hole 70 houses a respective acceleration conduit 2. The acceleration conduits 2, as already mentioned, are in turn configured to distribute polymeric fluid.

Therefore, the first holes 70 are adapted to allow the passage of polymeric fluid through the acceleration conduits 2.

The second holes 71 are instead spaced apart from the first holes 70. They are, in particular, adapted to allow the passage of air or gas.

Therefore, substantially, the first holes 70 are adapted to house part of the stem of the acceleration conduits 2 constrained to the support, or internal air plate, while the second holes 71 are adapted to be placed in fluid passage connection with the ventilation conduit of the support within which air or gas flows.

Obviously, the plate 7 is substantially an intermediate air plate. The mask 8, on the other hand, is an external air plate.

In fact, the mask 8 is adjacent to the plate 7 along the vertical axis 1c. This means that, substantially, the mask 8 is placed downstream of the plate 7 in relation to the dispensing direction of the polymeric filament.

In addition, the mask 8 preferably includes a plurality of third holes 80.

The third holes 80 are preferably centered with respect to the first holes 70. Furthermore, they are adapted to house part of the acceleration conduits 2, coming from the first holes 70 of the plate 7, and to allow, at the same time, the passage of air or gas. In fact, the third holes 80 are also in fluid passage connection with the second holes 71.

Advantageously, the second holes 71 are in a number greater than four. For example, the second holes 71 may be five, six, or even more, for example up to twelve.

Further, the second holes 71 are advantageously distributed around at least part of the holes 70, preferably but not necessarily all of the holes 70.

Further, the second holes 71 are centered along circumferences 7a. The circumferences 7a are substantially virtual closed lines.

Each circumference 7a develops parallel to the main plane 1b around a respective first hole 70 without touching any other first hole 70.

This means that the circumferences 7a along which the second holes 71 are distributed do not overlap with the area occupied by the acceleration conduits 2.

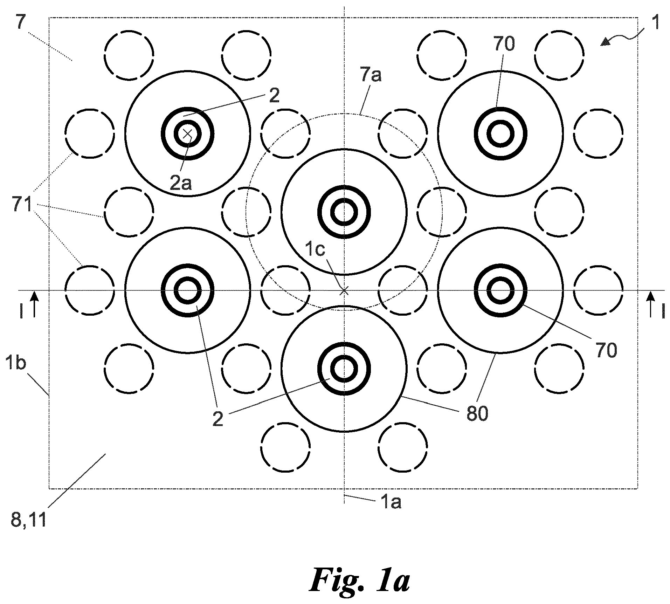

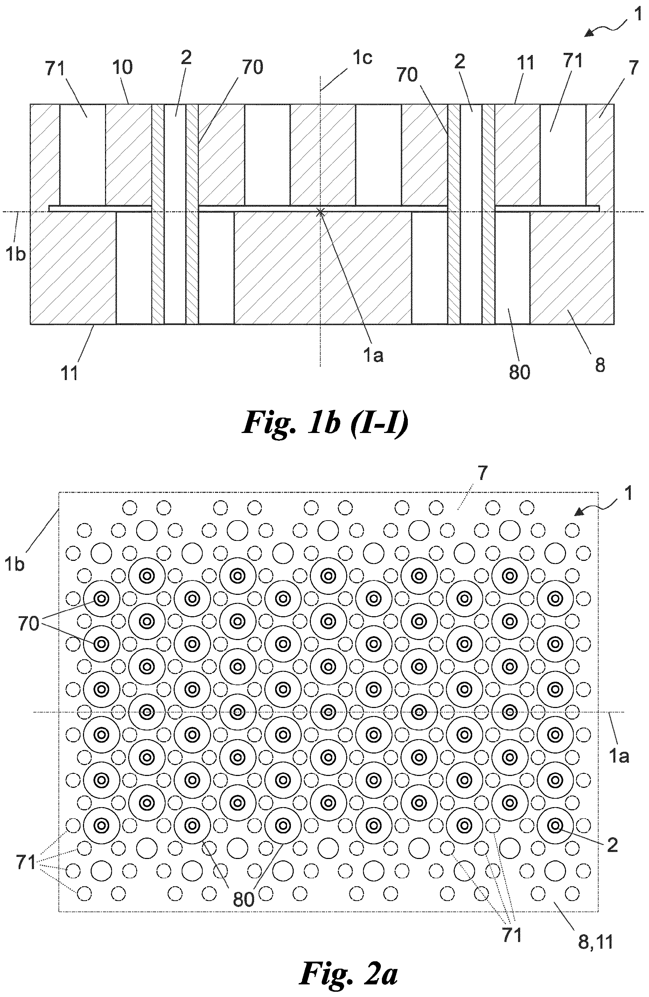

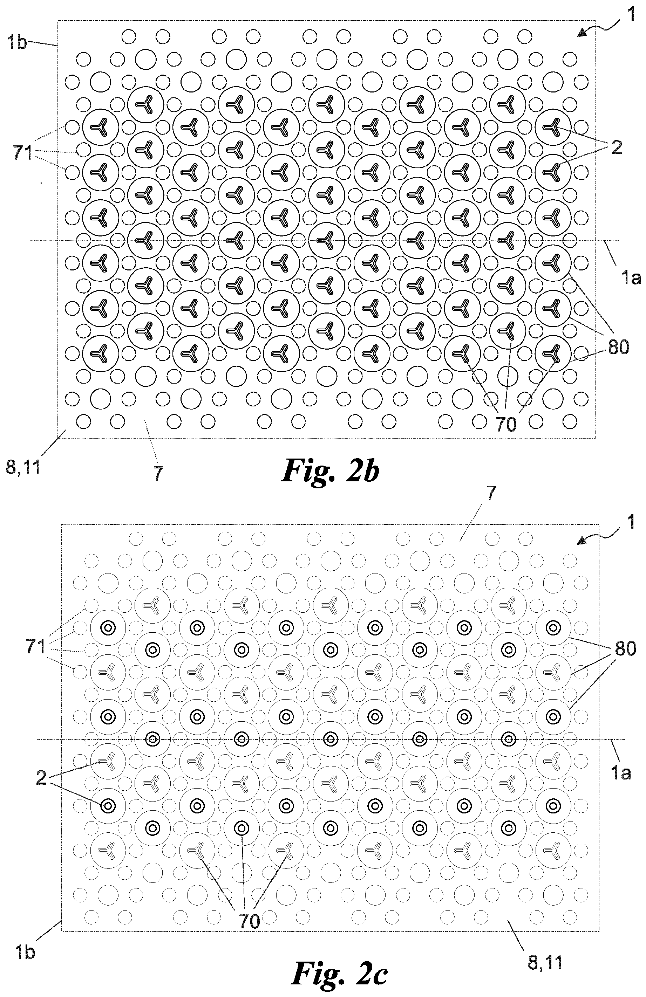

In other words, as can be seen from Figs. 1a and 2a-2d, the second holes 71 are distributed around at least part of the first holes 70, preferably all the first holes 70, in a number greater than four around each respective first hole 70. Therefore, for each first hole 70, all the second holes 71 are arranged around the first hole 70, advantageously distributed exclusively along the circumference 7a, which preferably extends parallel to said main plane 1b around the first hole 70 without touching any other first hole 70.

The second and third holes 71, 80 are preferably circular in shape parallel to the main plane 1b. The first holes 71 may be circular in shape and/or outlined like the acceleration conduits 2 parallel to the main plane 1b, as better specified below.

Furthermore, even more in detail, the first holes 70 may define a diameter comprised between 0.6 mm and 1 mm and the second and third holes 71, 80 may define diameters comprised between 1.2 mm and 1.7 mm

Advantageously, however, the plate 7 and the mask 8 can be in a single piece.

This means that the terms plate 7 and mask 8 do not necessarily refer to different and separate components of the spinneret 1, but in this case to portions of it.

In particular, the plate 7 and the mask 8 can be portions of the spinneret 1 substantially delimited by the main plane 1b.

The plate 7 is, therefore, adapted to be connected to a support, while the mask 8 faces outwards, with respect to the rest of the multi-row coaxial spunbond or melt-blown plant on which the spinneret 1 is installed.

The plate 7 is also usually facing upwards, while the mask 8 is pivoted downwards. The terms high and low are to be interpreted in reference to the ground. In fact, usually, multi-row coaxial spunbond or melt-blown plants distribute polymeric fluid towards the support surface, for example of conveyors that move parallel to the ground.

The plate 7 therefore defines at least a first end 10 of the spinneret 1.

The first end 10 is adapted to interface with a polymeric fluid distributor of a multi-row coaxial spunbond and/or melt-blown type plant. Then, the first end 10 is the portion of the spinneret 1 exposed upstream of the spinneret 1 on which the polymer fluid is conveyed.

For example, the first end 10 can be made by a face of the plate 7 parallel to the main plane 1b adapted to be constrained to the distributor of the plant.

The mask 8 also defines a second end 11 of the spinneret 1.

The second end 11 is arranged at a side of the spinneret 1 opposite the first end 10 with respect to the main plane 1b. Furthermore, the second end 11 is the portion at which the polymer fluid exits from the spinneret 1 in the form of polymer filaments. Therefore, the second end 11 is the portion of the spinneret 1, in particular of the mask 8, exposed downstream of the spinneret 1 and adapted to convey polymeric filaments towards the support surface.

For example, the second end 11 can be made from a face of the mask 8 parallel to the main plane 1b facing the support surface.

In any case, since the acceleration conduits 2 extend from plate 7 to mask 8, they extend at least from the first end 10 to the second end 11.

It is important to note that, especially in the case of a multi-row coaxial melt-blown plant, the termination of the acceleration conduits 2 may be flush with the second end 11 or it may also protrude from the second end 11 to the outside of the spinneret 1.

In addition to what has been described, the acceleration conduits 2 are distributed along a distribution axis 2b. The distribution axis 2b is preferably transverse to the main axis 1a and to the vertical axis 1c. Then, the acceleration conduits 2 are distributed along the distribution axis 2b in such a way as to realize, along the distribution axis 2b, a first row 2'.

In addition, the acceleration conduits 2 are also distributed along and parallel to the main axis 1a in such a way as to realize at least a second row 2".

The second row 2" is, therefore, preferably offset with respect to the first row 2' along the main axis 1a.

Furthermore, advantageously, at least one of the dispensing axes 2a of the acceleration conduits 2 of the first row 2' defines a first angle of inclination α'.

The first inclination angle α' is defined with respect to the main plane 1b. Furthermore, advantageously, the first angle of inclination α' is other than 90°. For example, the first angle of inclination α' may be comprised between 60° and 90°. Furthermore, at least one of the dispensing axes 2a of the acceleration conduits 2 of said second row 2' defines a second angle of inclination α".

The second angle of inclination α" is also defined with respect to the main plane 1b. Furthermore, advantageously, the second inclination angle α" is different from the first inclination angle α'.

This means that at least one pair of acceleration conduits 2 of the different rows 2',2" are differently inclined and thus dispense polymer filaments that can converge, for example, with the other polymer filaments.

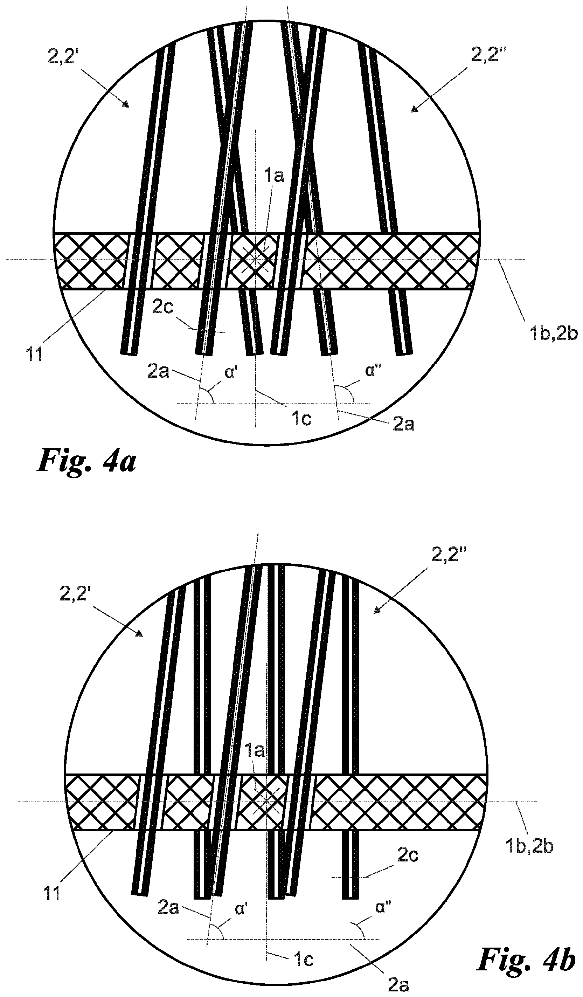

In particular, as shown in Figs. 4a-4b, preferably the dispensing axes 2a of all the acceleration conduits 2 of the first row 2' and/or of the second row 2" define respectively a same first angle of inclination α' and/or a same second angle of inclination α".

Even more in detail, one or more of the second angles of inclination α" may be equal to 90°, for example all the second angles of inclination α" as shown in Fig. 4b.

Or, again, the second angle of inclination α" may be opposite or additional to the first angle of inclination α', as for example shown in Fig. 4a.

As already mentioned, the acceleration conduit 2 is, as such, an element of substantially elongated shape and including a cavity through which polymer in the liquid state can percolate to allow extrusion, in particular from the spinneret 1. The acceleration conduit 2, therefore, comprises at least one inner surface 3.

The inner surface 3 is substantially closed. Furthermore, it develops around the dispensing axis 2a, since it is in fact facing onto it.

The inner surface 2, therefore, encloses the cavity.

Furthermore, the acceleration conduit 2 defines a plurality of outlines 4. The outlines 4 are mutually identical. Furthermore, they are arranged in succession along the dispensing axis 2a.

Thus, the outlines 4 are substantially formed along the dispensing axis 2a by the inner surface 3 and determine the overall shape of the cavity.

In particular, preferably, the outline 4 is determined on a sectional plane 2c.

The section plane 2c is preferably normal to the dispensing axis 2a. Therefore, the section plane 2c is substantially a virtual plane which, by cutting the acceleration conduit 2 normally to the dispensing axis 2a, defines on itself the outline 4 formed by the inner surface 3.

The outline 4 also defines a first extension area. The extension area is the portion of two-dimensional space contained within the outline 4.

Thus, the outline 4 is preferably inscribable in a circle. The circle is also determined on the section plane 2c. Of course, the circle is trivially a virtual geometric element within which the outline 4 is geometrically inscribable.

The circle, in addition, itself defines a second extension area on the section plane 2c. Hence, the second area of extension being determined by the two-dimensional space contained within the circle, it can be as known obtained by the formula A=π*r2.

Advantageously, the outline 4 does not have a shape corresponding to the circle. In fact, advantageously, the first extension area is less than 90% of the second extension area. Even more in detail, preferably, the first extension area is less than 60% of the second extension area.

Thus, the outline 4 can be made according to different embodiments.

For example, the outline 4 may be a convex figure. As is known, a convex figure is a figure in which any segment joining any two points of it is entirely contained in the figure itself.

Therefore, if the outline 4 is convex, it preferably defines a first dimension 4a and a second dimension 4b.

The first dimension 4a is substantially the maximum dimension that the outline 4 determines in one direction. The second dimension 4b is also the maximum dimension in a direction perpendicular to the first dimension 4a.

Preferably, the second dimension 4b is less than 90% of the first dimension 4a. Even more in detail, the second dimension 4b may be less than 60% of the first dimension 4a.

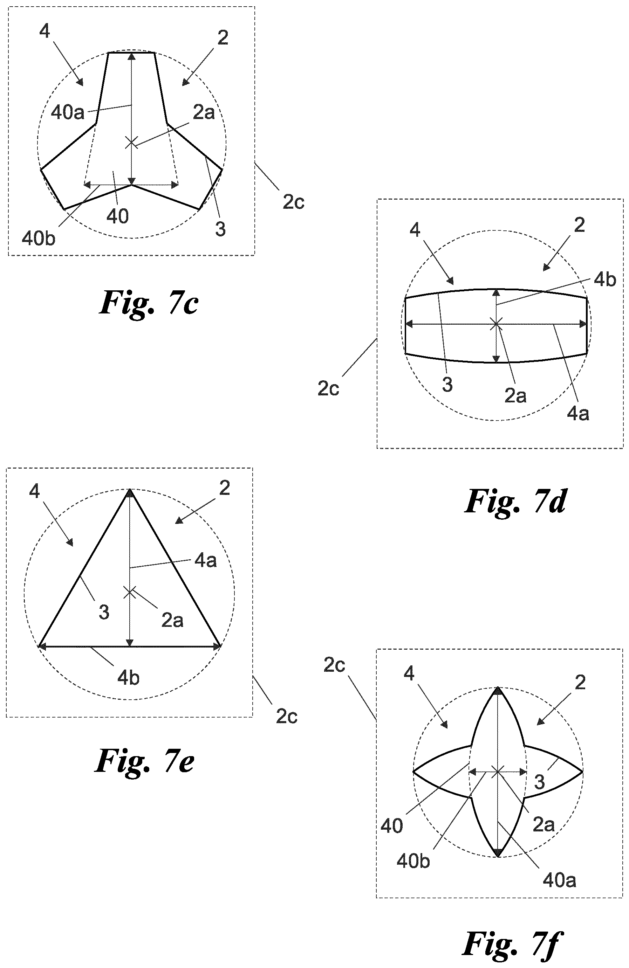

In addition, the dimensions may refer to geometrically well-defined outlines 4. For example, a convex outline 4 may have a nearly equilateral triangular shape, as shown in Fig. 7e, or almost rectangular, possibly even slightly rounded on the sides, as shown in Fig. 7d.

Of course, in the case of a triangle, the first dimension 4a may be provided by the height, while the second dimension 4b may be provided by the side intercepted by the height. In the case of the rectangle, the dimensions 4a, 4b may correspond to the respective sides.

In other embodiments, the outline 4 may instead be concave. Dually with respect to convexity, the concavity of a figure is manifested when there is at least one segment that joins a pair of points of the figure does not belong entirely to the figure itself. Thus, if the outline 4 is concave, it preferably includes at least one convex portion 40. The convex portion 40 is a part of a concave outline 4 that can be identified within the outline 4, in such a way as to be delimited at least in part, and which has the characteristic of convexity.

Therefore, also the convex portion 40 can, similarly to the convex outline 4, define a third dimension 40a and a fourth dimension 40b.

The third dimension 40a is substantially the maximum dimension that the convex portion 40 determines in one direction. The fourth dimension 40b is also the maximum dimension in a direction perpendicular to the third dimension 40a. Preferably, the fourth dimension 40b is less than 90% of the third dimension 40a. Even more in detail, the fourth dimension 40b may be less than 60% of the third dimension 40a.

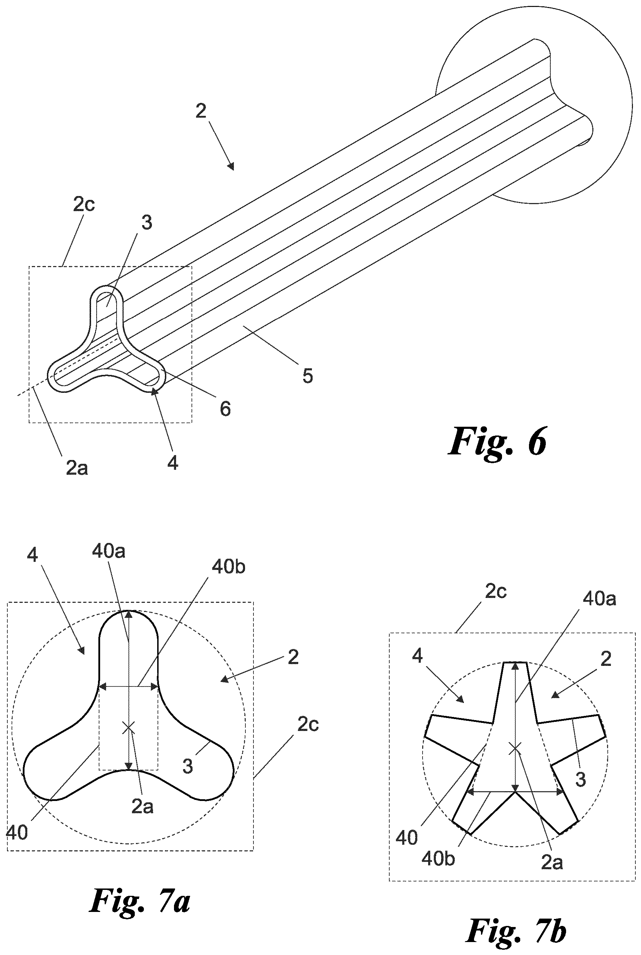

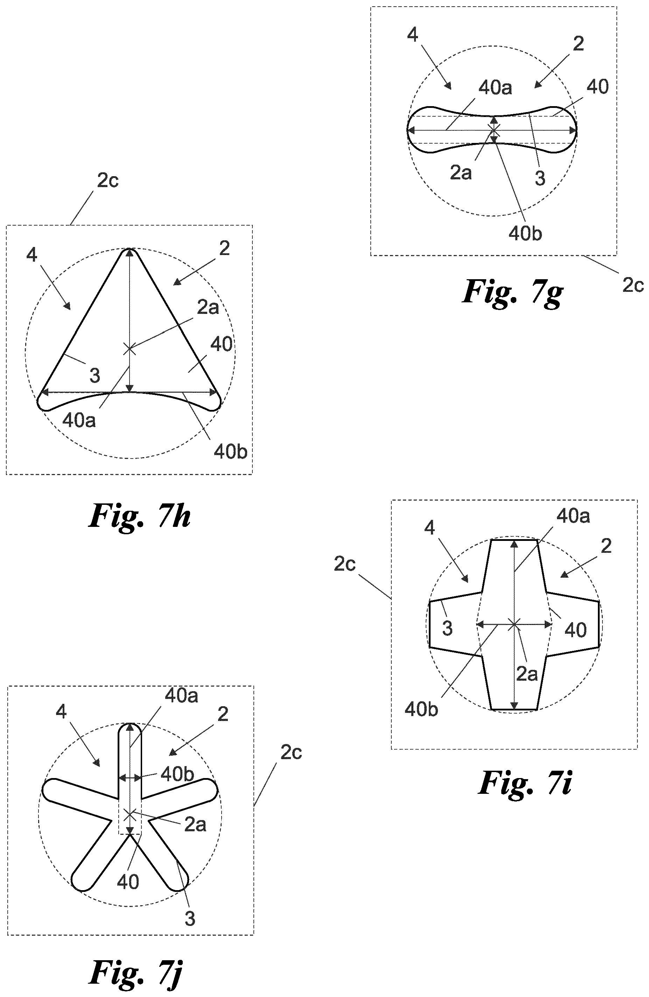

As previously, dimensions may refer to geometrically well-defined convex portions 40. For example, a convex portion 4 of an outline 4 may have an almost triangular shape, as shown for example in Fig. 7h, or almost rectangular as shown in Figs. 7g and 7j, possibly with a bevelled side as in Fig. 7a, or even trapezoidal, as shown in Figs. 7b-7c.

Of course, in the case of a triangle, the first dimension 4a may be provided by the height, while the second dimension 4b may be provided by the base side on which the height lies. In the case of the rectangle, the dimensions 4a, 4b may correspond to the respective sides.

More generally, a concave outline 4 may be formed by two or more mutually crossed convex portions 40. Hence, the concave outline 4 may define a cross/star shape having three to five tips (e.g. three as in Figs. 7a and 7c, or four as in Figs. 7f and 7i, or even five as in Figs. 7b and 7j).

In addition to what has been described, especially if the acceleration conduit 2 is a tube, it may also comprise an outer surface 5.

The outer surface 5 is also closed. Furthermore, the outer surface 5 develops around the inner surface 3. Then, the outer surface 5 wraps around the inner surface 3.

Preferably, moreover, the outer surface 5, which faces the outside of the acceleration conduit 2 and therefore not in contact with the cavity, is connected to the inner surface 3 via a wall 6.

The wall 6 is therefore surrounded by the surfaces 3, 5 and, therefore, the surfaces define opposite faces of the wall 6 with respect to the same wall 6.

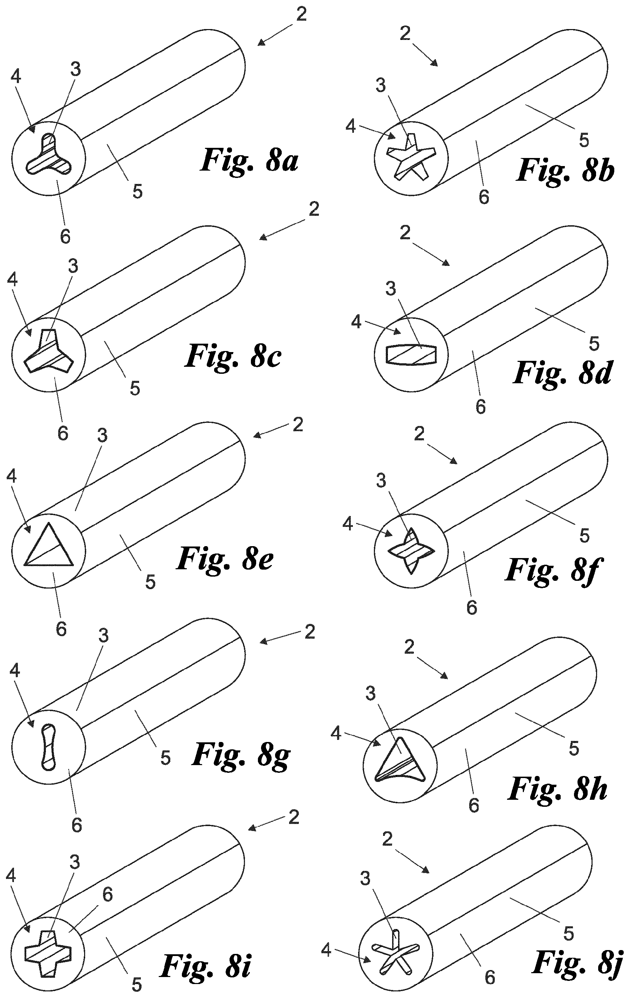

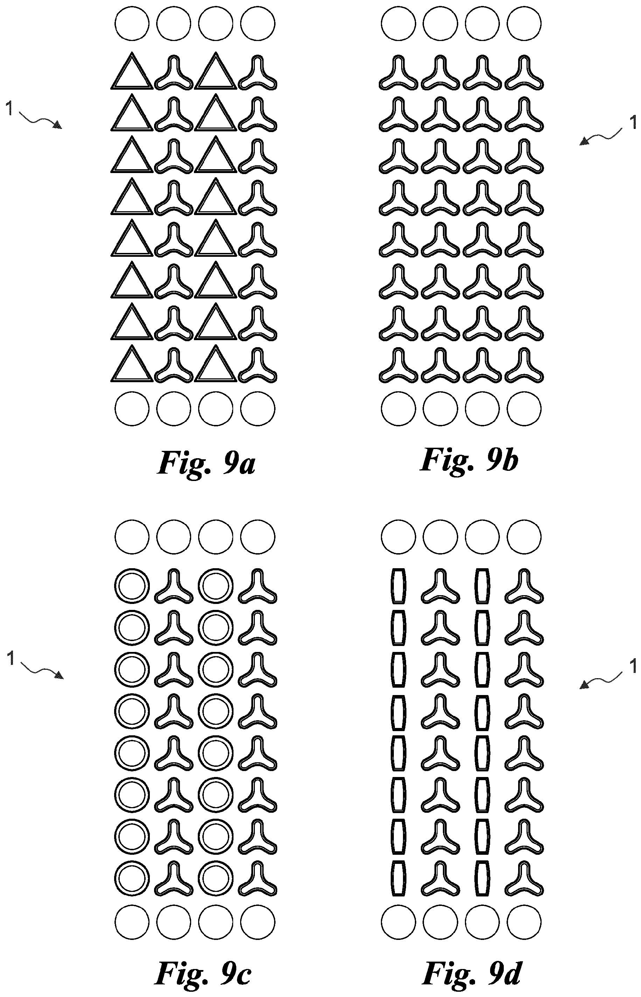

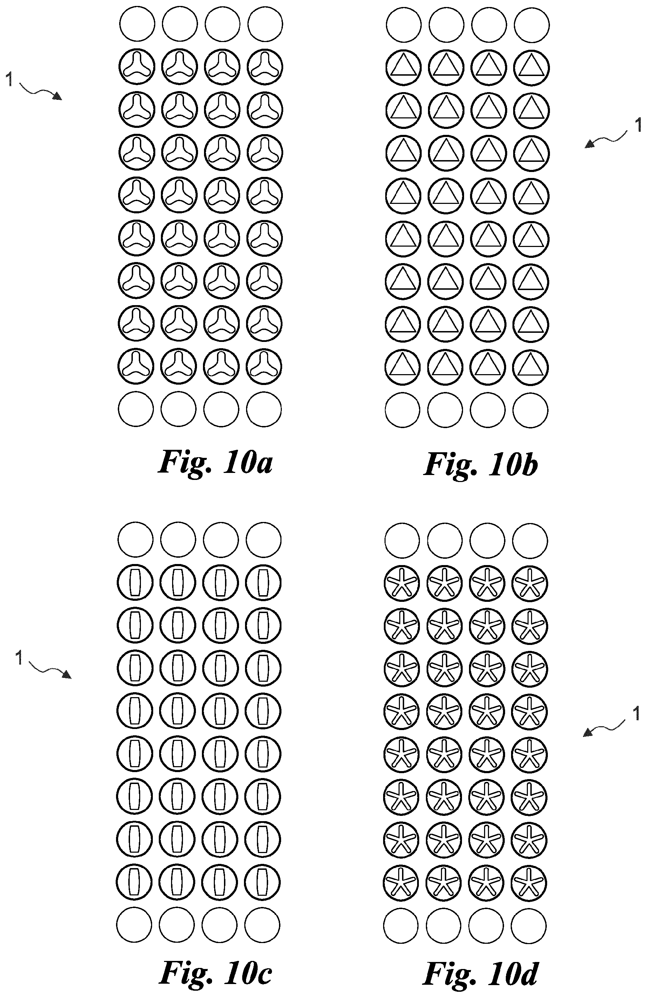

The outer surface 6 may thus be cylindrical, as shown in Figs. 8a-8j, 10a-10d and 11a-11d, or the outer surface 5 may alternatively be outlined as the inner surface 3. In this way, the surfaces 3, 5 determine a constant thickness for the wall 6, as shown for example in Figs. 6 and 9a-9d.

Of course, the acceleration conduit 2 can be used with other acceleration conduits 2 to form a group of acceleration conduits 2, for example also a tube pack for use in a plant.

Thus, among the various embodiments, the spinneret 1 may comprise a plurality of acceleration conduits 2 all defining a same outline 4, as in Figs. 9a-9d.

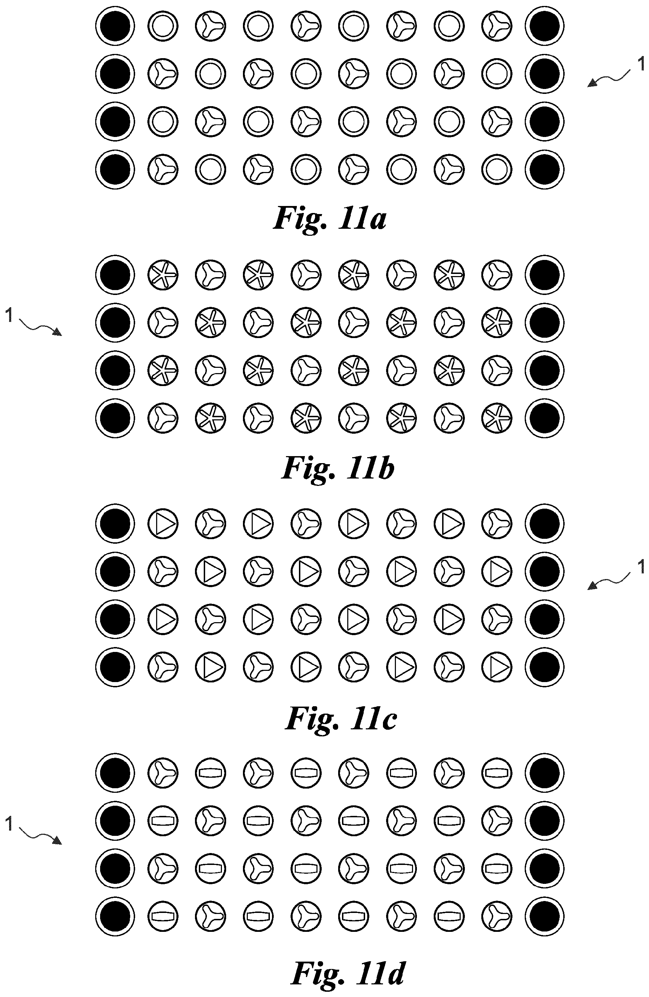

Or, the chain 1 may comprise a plurality of said acceleration conduits 2 defining respective mutually different outlines 4, as in Figs. 9a-9d and 11b-11d.

Or again, the spinneret 1 may comprise a plurality of acceleration conduits 2 each defining a circular outline, i.e. having a conventional outline according to the known art, as in Figs. 9c and 9a.

For example, the spinneret 1 may also comprise a plurality of acceleration conduits 2 each defining a circular outline, but different diameters.

Of course, the invention also comprises a multi-row coaxial spundbond and/or melt-blown plant comprising a spinneret 1 as just described according to the different possible embodiments.

The operation of the spinneret 1 for multi-row coaxial spunbond and/or melt-blown type plant described above in structural terms is substantially similar to the operation of any spinneret of the prior art, in the sense that it allows polymer fluid to be conveyed along the dispensing axes 2a of each acceleration conduit 2.

However, the spinneret 1 for multi-row coaxial spunbond and/or melt-blown type plant according to the invention achieves important advantages.

In fact, the spinneret 1 for a multi-row coaxial spunbond and/or melt-blown plant is very efficient and economical since the distribution of the secondary holes increases the effectiveness of the outlet air, reducing the costs necessary to heat the air since the same heat input makes it possible to increase the air temperature that makes it possible to extend the polymeric filament more.

The latter is smaller in diameter and distribution control is increased while reducing the possibility of filament breakage.

Further, the spinneret 1 for a multi-row coaxial spunbond and/or melt-blown type plant makes it possible to make a membrane, or layer, of sturdy non-woven fabric in different directions, in particular perpendicular to each other.

The fact that the filaments exit in different directions with different inclinations allows to obtain robustness of the fabric not only parallel to the main axis 1a, but also transversely to it, i.e. parallel to the distribution axis 2b.

Therefore, the spinneret 1 for multi-row coaxial spunbond and/or melt-blown type plant also allows to create robust diapers given by coupling the different layers formed by the plant, in which in particular the weaker layer is subject to less breakage and is therefore more resistant and durable.

The invention can be modified to create different versions falling within the scope of the inventive concept defined by the claims.

In this context, all the details can be replaced by equivalent elements and any materials, shapes and dimensions can be used.

## Claims

1. Spinneret (1) for multi-row coaxial spunbond and/or melt-blown type plant developing along a main axis (1a) and a main plane (1b), defining a vertical axis (1c) perpendicular to said main axis (1a) and said main plane (1b) and comprising:
- a plurality of acceleration conduits (2) each extending along its own dispensing axis (2a) transverse to said main plane (1b) and each adapted to dispense a respective polymeric filament along said dispensing axis (2a);
- a plate (7) including:
- first holes (70) adapted to house said acceleration conduits (2), and
- second holes (71) separated with respect to the first holes (70) and adapted to allow the passage of air or gas;
- a mask (8) adjacent to said plate (7) along said vertical axis (1a), including a plurality of third holes (80) centered with respect to said first holes (70), in fluid passage connection with said second holes (71) and adapted to house part of said acceleration conduits (2) and to allow, at the same time, the passage of said air or gas;
and **characterized in that**
- said second holes (71) are distributed around at least part of said first holes (70) and more than four in number, around each respective said first hole (70) , and
- for each said first hole (70) all said second holes (71) are distributed around said first hole (70) distributed exclusively along a circumference (7a) developing parallel to said main plane (1b) around a respective said first hole (70) without touching any other said first hole (70).

2. Spinneret (1) according to Claim 1, wherein said plate (7) and said mask (8) are in one piece.

3. Spinneret (1) according to any one of the preceding claims, wherein each of said second and third holes (71, 80) is circular in shape parallel to said main plane (1b) and one or more of said first holes (70) are circular in shape and/or are outlined as a respective said acceleration conduit (2) parallel to said main plane (1b).

4. Spinneret (1) according to the preceding claim, wherein said first holes (70) define a diameter between 0.6 mm and 1 mm and said second and third holes (71, 80) define diameters between 1.2 mm and 1.7 mm.

5. Spinneret (1) according to the preceding claim, wherein said plate (7) defines a first end (10) of said spinneret (1) adapted to interface with a polymeric fluid distributor of a multi-row coaxial spunbond and/or melt-blown plant, said mask (8) defines a second end (11) of said spinneret (1) arranged at a side of said spinneret (1) opposite to said first end (10) with respect to said main plane (1b) at which said polymeric fluid exits from said spinneret (1) in the form of said polymeric filaments; and said acceleration conduits (2) are distributed both along a distribution axis (2b) transverse to said main axis (1a) and said vertical axis (1c) so as to make a first row (2'), and parallel to said main axis (1a), making at least a second row (2") offset from said first row (2') along said main axis (1a); at least one of said dispensing axes (2a) of said acceleration conduits (2) of said first row (2') defining a first angle of inclination (α') with respect to said main plane (1b) other than 90°, and at least one of said dispensing axes (2a) of said acceleration conduits (2) of said second row (2') defining a second angle of inclination (α") with respect to said main plane (1b) different from said first angle of inclination (α').

6. Spinneret (1) according to the preceding claim, wherein said dispensing axes (2a) of all said acceleration conduits (2) of said first row (2') and/or said second row (2") respectively define a same said first angle of inclination (α') and/or the same said second angle of inclination (α").

7. Spinneret (1) according to any one of the Claims 5-6, wherein one or more of said second angles of inclination (α") are equal to 90°.

8. Spinneret (1) according to any one of the Claims 5-7, wherein said second angle of inclination (α") is opposite or additional to said first angle of inclination (α').

9. Spinneret (1) according to any one of the Claims 5-8, wherein said first angle of inclination (α') is comprised between 60° and 90°.

10. Spinneret (1) according to any one of the preceding claims, wherein one or more of said acceleration conduits (2) comprises at least one closed inner surface (3), developing around said dispensing axis (2a) and defining a plurality of mutually identical outlines (4) arranged in succession along said dispensing axis (2a); wherein said outline (4) is determined on a section plane (2c) normal to said dispensing axis (2a); wherein said outline (4) defines a first extension area on said section plane (2c); wherein said outline (4) is inscribable in a circle determined on said section plane (2c); and wherein said circle defines a second extension area on said section plane (2c);
- said first extension area being less than 90% of said second extension area.

11. Spinneret (1) according to the preceding claim, wherein said first extension area is less than 60% of said second extension area.

12. Spinneret (1) according to any preceding claim, wherein said outline (4) is convex and defines at least a first maximum dimension (4a) and a second maximum dimension (4b) perpendicular to said first dimension (4a) and less than 90% of said first dimension (4a).

13. Spinneret (1) according to any one of claims 10-11, wherein said outline (4) is concave and includes at least one convex portion (40) identifiable within said outline (4) in such a way as to be delimited by at least part of said outline (4) and defining at least a third maximum dimension (40a) and a fourth maximum dimension (40b), perpendicular to said third dimension (40a) and less than 90% of said third dimension (40a).

14. Spinneret (1) according to any one of the preceding claims, wherein said outline (4) is formed by two or more said mutually crossed convex portions (40).

15. Spinneret (1) according to the preceding claim, comprises a plurality of said acceleration conduits (2) all defining a same said outline (4), or said mutually different outlines (4) and/or of which one or more of circular type.
